# EUROPÄISCHE PATENTANMELDUNG

(11) **EP 2 837 296 A1**
(43) Veröffentlichungstag der Anmeldung: **18.02.2015**
(21) Anmeldenummer: 13180137.5
(22) Anmeldetag: 12.08.2013
(51) Int. Cl.: A24D 3/10, B01J 21/06, C08L 1/12, C08L 1/14

(54) **Katalytisch abbaubarer Kunststoff sowie dessen Verwendung**

(71) Anmelder: Solvay Acetow GmbH, 79108 Freiburg (DE)
(72) Erfinder: Die Erfindernennung liegt noch nicht vor
(74) Vertreter: Mross, Stefan P.M.

(57) **Zusammenfassung**

Beschrieben wird ein katalytisch abbaubarer Kunststoff mit einem Gehalt an Celluloseestern sowie gegebenenfalls Additiven. Besonderes Kennzeichen dieses katalytisch abbaubaren Kunststoffs ist es, daß er ein dispergiertes, katalytisch wirksames übergangsmetallmodifiziertes Titandioxid enthält.

## Beschreibung

Die Erfindung betrifft einen katalytisch abbaubaren Kunststoff, insbesondere mit einem Gehalt an Celluloseestern sowie die Verwendung desselben, insbesondere in Filtertows zur Herstellung von Filterstöpseln von Filterzigaretten.

Kunststoffe, die am Ende ihres Lebenszyklus in die Umwelt gelangen oder gelangen können, sollten unter den dort herrschenden Bedingungen innerhalb kurzer Zeiträume abbaubar sein, um eine Belastung möglichst gering zu halten. Allerdings hängt auch bei Kunststoffen, die prinzipiell biologisch abbaubar sind, die Zeitdauer ihrer Zersetzung stark von den äußeren Bedingungen ab. So ist der Abbau unter Kompostierbedingungen schneller als in ebenfalls Mikroorganismen enthaltenden Böden. Deutlich langsamer ist der Bioabbau, wenn die Bedingungen für die dazu notwendigen Mikroorganismen unzureichend sind. Dies ist der Fall, wenn der entsprechende Kunststoff ganz oder teilweise auf einer Oberfläche, zum Beispiel Steinplatten, Asphalt, Sand, Erde oder Gras, liegt. Unter diesen Umständen sind andere oder zusätzliche Abbaumechanismen notwendig. Besonders geeignet ist in diesen Fällen die photokatalytische Zersetzung unter Einwirkung von Licht. Diese kann der alleinige Mechanismus für einen vollständigen Abbau des Materials sein, aber auch eine unterstützende Wirkung für andere Abbaumechanismen haben.

Seit langem ist bekannt, daß Titandioxid, insbesondere in der Anatasmodifikation, durch photokatalytische Wirkung organische Materialien zersetzen kann. Anatas absorbiert Licht im ultravioletten Bereich des Spektrums, wobei durch die nachfolgenden Elektronen- übertragungen Radikale entstehen, die einen durch Kettenmechanismus bewirkten Abbau einleiten.

In Folge eines verstärkten öffentlichen Focus in den 1990er Jahren auf den Verbleib von Kunststoffmaterialien nach der Erfüllung ihres Einsatzzweckes wurden verstärkt Arbeiten zum Abbau von Celluloseestern und daraus hergestelltem Filtertow in der Umwelt durchgeführt.

Die Anmelderin hat bereits zufriedenstellende Lösungen für den photokatalytischen Abbau von polymeren Celluloseestern zur Verfügung gestellt (siehe z.B WO-A-2010/017989) in der die Abbaubarkeit durch kohlenstoffmodifiziertes Titandioxid erhöht wird.

Ausgehend von dem vorstehend geschilderten Stand der Technik lag der Erfindung die Aufgabe zugrunde, weitere unter Umweltbedingungen katalytisch abbaubare Kunststoffe anzugeben. Darüber hinaus strebt es die Erfindung an, daß dieser katalytisch abbaubare Kunststoff als Formkörper vorteilhafte Anwendung finden soll, insbesondere in einem Filtertow zur Herstellung eines Filterstöpsels eines Zigarettenfilters.

Erfindungsgemäß wird diese Aufgabe durch einen katalytisch abbaubaren Kunststoff der eingangs bezeichneten Art dadurch gelöst, daß der katalytisch abbaubare Kunststoff ein katalytisch wirksames, übergangsmetallmodifiziertes Titandioxid enthält, dies insbesondere in fein verteilter Form, z.B. in dem Kunststoff dispergiert.

"Übergangsmetallmodifiziert" bedeutet im Sinne der vorliegenden Erfindung insbesondere, dass das Titandioxid durch Zusatz, (z.B. Mischen, Imprägnieren, Ko-Fällen, Ko-Kristallisieren) von Metallen, Metallverbindungen oder Metallkomplexen der Übergangsmetalle verändert wurde. "Übergangsmetalle" sind Metalle der Gruppen 3 bis 12 des Periodensystems (IUPAC, 2013), mit Ausnahme von Titan wie z.B. Chrom, Cobalt, Kupfer, Nickel, Silber, Gold, Vanadium, Zirkon, Wolfram, Molybdän, Tantal, Niob, Mangan, Zink und Eisen. Bevorzugt sind nicht oder wenig toxische Übergangsmetalle, wie insbesondere Mangan, Zink und Eisen. Eisen ist ganz besonders bevorzugt. Spezielle geeignete eisenmodifizierte Titanoxide, die Eisen(III)oxid enthalten, wurden in der WO-A-2012/139726 offenbart, deren Inhalt durch Bezugnahme in die vorliegende Anmeldung aufgenommen wird.

Überraschenderweise führt die Modifizierung des Titandioxids mit Übergangsmetallen zu einer Verbesserung der katalytischen Aktivität zum Abbau von Kunststoffen ohne die Gebrauchseigenschaften der Kunststoffprodukte wesentlich zu beeinträchtigen.

Wenn der Kunststoff ein Celluloseester ist, sind Celluloseacetat, Cellulosepropionat, Cellulosebutyrat, Celluloseacetatpropionat und/oder Celluloseacetatbutyrat besonders bevorzugt. Der durchschnittliche Substitutionsgrad (DS) liegt vorzugsweise zwischen 1,5 und 3,0, insbesondere zwischen 2,2 bis 2,7, dies insbesondere beim Celluloseacetat. Zweckmäßig ist es, wenn der Celluloseester, insbesondere Celluloseacetat, bezüglich des durchschnittlichen Polymerisationsgrads im Hinblick auf eine vorteilhafte Lösung der gestellten Aufgabe optimiert ist. Der optimale durchschnittliche Polymerisationsgrad liegt bei dem Celluloseester zwischen 150 und 500, insbesondere zwischen 180 und 280.

Die erfindungsgemässen Kunststoffe, insbesondere Celluloseesterzusammensetzungen lassen sich mit hoher Geschwindigkeit in der Umwelt katalytisch abbauen. Eine geeignete Meßgröße ist, wie die nachfolgenden Beispiele zum Ausdruck bringen, die zeitliche Reduzierung der Masse des katalytisch abbaubaren Kunststoffs. Der Kern der Erfindung liegt also in der Auswahl eines übergangsmetallmodifizierten Titandioxids, das auf seiner Oberfläche oder auch im gesamten Volumen übergangsmetallmodifiziert ist. Bevorzugt wird ein übergangsmetallmodifiziertes Titandioxid, dessen Oberfläche übergangsmetalldotiert ist. Durch die Dotierung wird die Bandlücke des Halbleiters Titandioxid verkleinert und es kann im Vergleich zu undotiertem Titandioxid auch längerwelliges Licht zur Anregung eines Valenzbandelektrons und damit zur Aktivierung der photokatalytischen Eigenschaften genutzt werden.

Zweckmäßigerweise wird die Kristallitgröße des übergangsmetalldotierten Titandioxids optimiert, wobei die Kristallitgröße vorzugsweise zwischen 5 und 150 nm, insbesondere zwischen 7 bis 25 nm liegt. Im Einzelfall kann es vorteilhaft oder sogar notwendig sein, ein grobteiliges übergangsmetallmodifiziertes Titandioxid zu mahlen, um die optimale Korngröße einzustellen. Zweckmäßigerweise weist das übergangsmetallmodifizierte Titandioxid eine Dichte (ISO 787, Teil 10) von 3,0 bis 5,0 g/cm³ auf, insbesondere von 3,5 bis 4,2 g/cm³ auf. Vorteilhaft wirkt sich auch für einen Abbau des Celluloseester-haltigen Kunststoffs eine Optimierung der spezifischen Oberfläche des übergangsmetallmodifizierten Titandioxids aus. Dabei ist es bevorzugt, wenn die spezifische Oberfläche BET des übergangsmetalldotierten Titandioxids größer als 100 m2/ g, insbesondere größer als 250 m²/g ist. Besonders vorteilhaft wirkt sich die Einbeziehung eines übergangsmetallmodifizierten Titandioxids in den erfindungsgemäßen katalytisch abbaubaren Kunststoff dann aus, wenn das übergangsmetallmodifizierte Titandioxid mit einer gegenüber reinem Titandioxid erhöhten Lichtabsorption im Bereich von λ ≥ 400 nm gekennzeichnet ist.

Um die katalytische Abbaubarkeit des erfindungsgemäßen Kunststoffs weiter zu verbessern, ist es zweckmäßig, dessen Gehalt an übergangsmetallmodifiziertem Titandioxid auf 0,1 bis 5 Gew.-%, insbesondere auf 0,3 bis 1,5 Gew.-% einzustellen.

Der Übergangsmetallgehalt des übergangsmetallmodifizierten Titandioxids ist nicht wesentlich beschränkt. Vorzugsweise enthält das übergangsmetallmodifizierte Titandioxid Übergangsmetall in einer Menge von 0,05 bis 5 Gew.-%, insbesondere von 0,3 bis 3 Gew.-%.

Erfindungsgemäß ist es möglich, dass der katalytisch abbaubare Kunststoff im Wesentlichen nicht allein auf Celluloseestern basiert. Es können übliche Additive wie z. B. Weichmacher, einbezogen sein, so in dem Falle der Verwendung in Fasern der Filtermaterialien von Zigaretten.

Andererseits kann zusätzlich ein nicht-übergangsmetallmodifiziertes Titandioxid, insbesondere Anatas, in feiner Dispergierung einbezogen sein, dies insbesondere in dem die Zigarettenindustrie betreffenden Anwendungsfall. Um den erfindungsgemäßen Gedanken möglichst weitgehend zu folgen und die besondere photokatalytische Wirksamkeit des übergangsmetallmodifizierten Titandioxids beim Abbau eines Kunststoffs zu nutzen, ist es bevorzugt, dass der Gehalt des katalytisch abbaubaren Kunststoffs an Celluloseester mindestens 60 Gew.-% insbesondere mindestens 90 Gew.-% ausmacht.

Die gute katalytische Abbaubarkeit des erfindungsgemäßen Kunststoffs, erweist sich insbesondere dann, wenn der katalytisch abbaubare Kunststoff in einen Formkörper überführt wird, insbesondere in Fasern, Folien, insbesondere tiefgezogene Folien, vor allem zur Anwendung als Verpackungsmaterialien, von Spritzgußartikeln, dickwandigen Formkörpern, Granulaten, Mikrobeads, Perlen sowie Gefäßen. Besonders vorteilhaft ist daher die Weiterverarbeitung dieser Fasern zu Filtertows, mit denen Filterstäbe und daraus Filterstöpsel von Filterzigaretten hergestellt werden. Derartige Filterstöpsel, die sich in der Umwelt finden, werden bedeutend schneller als solche abgebaut, die nicht modifiziertes Titandioxid enthalten.

Schließlich sei noch angemerkt, dass das Verfahren zur Herstellung des erfindungsgemäßen katalytisch abbaubaren Kunststoffs keinen besonderen Beschränkungen unterliegt. Eine Möglichkeit besteht darin, die Einzelbestandteile dadurch zu vermischen, indem der Kunststoff aufgeschmolzen und die relevanten Bestandteile eingemischt werden. Die Herstellung der Fasern erfolgt zweckmäßigerweise nach dem Trockenspinnverfahren, wenngleich das Nassspinnverfahren ebenfalls in Betracht kommen kann. Beim Trockenspinnverfahren wird der Kunststoff, insbesondere Celluloseester vorzugsweise in üblicher Weise, beispielsweise in Aceton, aufgelöst. Dann werden die relevanten weiteren Bestandteile, wie insbesondere das übergangsmetallmodifizierte Titandioxid hinzugegeben, um dann in einem Trocknungskanal den üblichen Spinnvorgang vorzunehmen.

Die Erfindung wird nachfolgend anhand von Beispielen noch näher erläutert :

### Beispiel 1

Ein gemäss Beispiel 2 der WO 2012/139726 hergestelltes eisenmodifiziertes TiO2 wird gemäss dem in Beispiel 1 der WO 2010/017989 offenbarten Verfahren bei der Herstellung eines Celluloseacetat basierenden Filterstabes verwendet. Der erfindungsgemässe Filterstab zeigt eine im Vergleich zu einem mit nicht modifiziertem TiO2 hergestellten Filterstab eine verbesserte Abbaubarkeit unter Umweltbedingungen.

## Patentansprüche

1. Katalytisch abbaubarer Kunststoff, insbesondere photokatalytisch abbaubarer Kunststoff, **dadurch gekennzeichnet, dass** der katalytisch abbaubare Kunststoff ein katalytisch wirksames durch Zusatz mindestens eines Übergangsmetalles, insbesondere Eisen, modifiziertes Titandioxid enthält.

2. Katalytisch abbaubarer Kunststoff nach Anspruch 1, **dadurch gekennzeichnet, dass** der Kunsstoff ein Celluloseester, insbesondere Celluloseacetat, Cellulosepropionat, Cellulosebutyrat, Celluloseacetatpropionat und/oder Celluloseacetatbutyrat darstellt.

3. Katalytisch abbaubarer Kunststoff nach Anspruch 1 oder 2, **dadurch gekennzeichnet, dass** der Celluloseester, insbesondere Celluloseacetat, einen durchschnittlichen Substitutionsgrad (DS) von 1,5 bis 3,0, insbesondere 2,2 bis 2,7, aufweist.

4. Katalytisch abbaubarer Kunststoff nach einem der Ansprüche 1 bis 3, **dadurch gekennzeichnet, dass** der Celluloseester, insbesondere Celluloseacetat, einen durchschnittlichen Polymerisationsgrad von 150 bis 500, insbesondere von 180 bis 280 aufweist.

5. Katalytisch abbaubarer Kunststoff nach mindestens einem der vorhergehenden Ansprüche, **dadurch gekennzeichnet, daß** er zusätzlich in feiner Dispergierung ein nicht-übergangsmetallmodifiziertes Titandioxid enthält, insbesondere Anatas.

6. Katalytisch abbaubarer Kunststoff nach mindestes einem der vorhergehenden Ansprüche, **dadurch gekennzeichnet, dass** das übergangsmetallmodifizierte Titandioxid auf seiner Oberfläche übergangsmetalldotiert ist.

7. Katalytisch abbaubarer Kunststoff nach mindestens einem der vorhergehenden Ansprüche, **dadurch gekennzeichnet, dass** das übergangsmetallmodifizierte Titandioxid eine Kristallitgröße von 5 bis 150 nm, insbesondere von 7 bis 25 nm aufweist.

8. Katalytisch abbaubarer Kunststoff nach mindestens einem der vorhergehenden Ansprüche, **dadurch gekennzeichnet, dass** das übergangsmetallmodifizierte Titandioxid eine Dichte (ISO 787, Teil 10) von 3,0 bis 5,0 g/cm³, insbesondere von 3,5 bis 4,2 g/cm3 aufweist.

9. Katalytisch abbaubarer Kunststoff nach mindestens einem der vorhergehenden Ansprüche, **dadurch gekennzeichnet, dass** die spezifische Oberfläche (nach BET) des übergangsmetallmodifizierten Titandioxids größer als 100 m²/g, insbesondere größer als 250 m²/g ist.

10. Katalytisch abbaubarer Kunststoff nach mindestens einem der vorhergehenden Ansprüche, **dadurch gekennzeichnet, dass** das übergangsmetallmodifizierte Titandioxid mit einer gegenüber reinem Titandioxid erhöhten Lichtabsorption im Bereich von λ ≥ 400 nm gekennzeichnet ist.

11. Katalytisch abbaubarer Kunststoff nach mindestens einem der vorhergehenden Ansprüche, **dadurch gekennzeichnet, dass** der katalytisch abbaubare Kunststoff 0,1 bis 5 Gew.-%, insbesondere 0,3 bis 1,5 Gew.-% übergangsmetalldotiertes Titandioxid enthält.

12. Katalytisch abbaubarer Kunststoff nach mindestens einem der vorhergehenden Ansprüche, **dadurch gekennzeichnet, dass** das übergangsmetallmodifizierte Titandioxid einen Übergangsmetallgehalt von 0,05 bis 5 Gew.-%, insbesondere von 0,3 bis 3 Gew.-% aufweist.

13. Katalytisch abbaubarer Kunststoff nach mindestens einem der vorhergehenden Ansprüche, **dadurch gekennzeichnet, dass** der Gehalt an Celluloseester mindestens 60 Gew.-%, insbesondere 90 Gew.-% ausmacht.

14. Katalytisch abbaubarer Kunststoff nach mindestens einem der vorhergehenden Ansprüche als Formköper, insbesondere in Form von Fasern, insbesondere Fasern, die Bestandteile eines Filtertow sind, Folien, insbesondere tiefgezogenen Folien, insbesondere zur Anwendung als Verpackungsmaterialien, von Spritzgussartikeln, dickwandigen Formkörpern, Granulaten, Mikrobeads, Perlen sowie Gefäßen.

15. Verwendung des katalytisch abbaubaren Kunststoffs nach Anspruch 14, **dadurch gekennzeichnet, dass** das Filtertow zur Herstellung von Filterstöpseln von Zigarettenfiltern herangezogen wird.
